# EUROPEAN PATENT APPLICATION

(11) **EP 4 129 086 A1**
(43) Date of publication of application: **08.02.2023**
(21) Application number: 21774020.8
(22) Date of filing: 26.03.2021
(51) Int. Cl.: A23L 27/00

(54) **CONTAINER-PACKED COMPOSITION AND METHOD FOR IMPROVING FLAVOR OF CITRUS JUICE**

(30) Priority: 26.03.2020 JP 2020056773
(71) Applicant: Kikkoman Corporation, Noda-shi, Chiba 278-8601 (JP)
(72) Inventor: OSHIMA, Mariko, Noda-Shi, Chiba 278-8601 (JP); OHNO, Naoto, Noda-shi, Chiba 278-8601 (JP); SATO, Kaoru, Noda-Shi, Chiba 278-8601 (JP)
(74) Representative: Schulz Junghans Patentanwälte PartGmbB
(86) International application number: PCT/JP2021/012890
(87) International publication number: WO 2021/193924

(57) **Abstract**

An objective of the present invention is to provide a composition containing various kinds of citrus juice including yuzu juice and having improved citrus flavor such that the composition can be easily and variedly prepared. The above objective can be achieved by a container-packed composition comprising citrus juice and 1 ppb to 2,000 ppb of phenethyl acetate; a processed food or beverage comprising, as raw materials, the composition and an ingredient, or a method of producing the processed food or beverage; a container-packed processed food or beverage comprising citrus juice and 1 ppb to 2,000 ppb of phenethyl acetate; and so on.

## Description

### Technical Field

The present invention relates to a container-packed composition, a processed food or beverage, and a method of improving citrus juice.

### Background Art

Citrus juice has been widely used as an ingredient in seasonings and foods or beverages. Among citrus juices, juice of aromatic citrus fruit with high acidity has a rich flavor. This makes seasonings and foods or beverages containing citrus juice (e.g., aromatic citrus fruit juice), such as ponzu vinegar, juice, or dressing, highly palatable with a pleasant citrus-like flavor.

Unfortunately, when citrus juice-containing seasonings or foods or beverages are stored at room temperature or subjected to heat sterilization, a problem of reduced citrus-like flavor arises. Thus, several measures have been explored and developed to suppress deterioration of the citrus-like flavor in juice-containing products caused by storage and processing.

For example, there is a report on citrus juice containing yuzu juice and shiikuwasha juice, from which fibers and oils have been removed, in a certain mass ratio so as to maintain the intrinsic aroma and taste of yuzu (see Patent Literature 1; all the description of all the literatures disclosed herein, including this literature, are herein incorporated by reference as a disclosure). There is also a report on a ponzu soy sauce seasoning with a certain content ratio of p-cymene, potassium ion, sodium ion, acetic acid, and citric acid so as to suppress occurrence of aged smell during storage and off-flavors due to heat sterilization (see Patent Literature 2). Further, there is a report on a citrus flavoring composition containing citrus fruit and rotundone as an enhancer for the freshness of the citrus fruit and taste of the fruit juice (see Patent Literature 3) .

Meanwhile, there is a report that a higher alcohol compound such as 1-octanol, 1-heptanol, 1-pentanol, or 1-hexanol has the effect of clearly masking a fruit-like aroma, while each ester compound including phenethyl acetate has no effect on the fruit-like aroma (see Patent Literature 4).

### Citation List

### Patent Literature

Patent Literature 1: Japanese Patent No. 6568741
Patent Literature 2: Japanese Patent No. 5993526
Patent Literature 3: Japanese Patent No. 6262170
Patent Literature 4: Japanese Patent No. 5296864

### Summary of Invention

### Technical Problem

The citrus juice described in Patent Literature 1 is useful for maintaining the intrinsic aroma and taste of yuzu, but does not maintain the flavor of fruit juice other than yuzu juice. In the ponzu soy sauce seasoning described in Patent Literature 2, the contents of p-cymene, potassium ion, sodium ion, acetic acid, and citric acid must be in a certain ratio. Thus, the ponzu soy sauce seasoning suffers from difficulty in preparing the seasoning so that many components have predetermined amounts. In the citrus flavoring composition described in Patent Literature 3, a very small amount of the active ingredient, rotundone, is effective. However, even a trace amount, 100 ppt, thereof can give a spicy taste. Accordingly, the amount control is difficult. Besides, the composition has a problem of lack of versatility, because rotundone-containing material, such as pepper, cannot be used instead of rotundone.

In addition, little is known about the means to suppress the deterioration of citrus-like flavor caused by storage and processing of various fruit juices, including yuzu juice, with easy preparation and variation in the preparation method.

Therefore, a technical problem to be solved by the present invention is to provide a composition containing various kinds of fruit juice including yuzu juice and having improved citrus flavor such that the composition can be easily and variedly prepared.

### Solution to Problem

The present inventors have diligently conducted intensive research to solve the above problem. Trial and error were made to obtain fruit juice-containing products, such as seasonings and foods or beverages, with improved citrus flavor regardless of storage and processing, by combining a number of components as appropriate.

After numerous examinations, the present inventors have finally found that addition of a certain amount of phenethyl acetate together with citrus juice could result in a fruit juice-containing product with improved citrus juice flavor. This finding was surprising, given the conventional technical knowledge that phenethyl acetate has no effect on fruit-like aroma, as described in Patent Literature 4. The odor threshold of phenethyl acetate is said to be 3,000 ppb (National Institute of Health Sciences, [online]http://www.nihs.go.jp/hse/food-info/chemical/kanshi/table3.xls). This effect of phenethyl acetate in an amount of this threshold or less on improving the flavor of citrus juice is reasonably considered to be not due solely to the aroma of phenethyl acetate, but is rather unexpected.

In addition, the present inventors have conducted further research to reveal that phenethyl acetate can improve the flavor of citrus juice in a fruit juice-containing product independent of the kind and concentration of fruit juice, the temperature of storage and processing, and/or the presence or absence of heat treatment. Furthermore, the present inventors have come to the very surprising finding that phenethyl acetate has a suppressing action on a decrease in a terpene, which is considered to be an aroma component in citrus juice.

In view of such findings, the present inventors have successfully created: a container-packed composition including citrus juice and phenethyl acetate; a processed food or beverage; a method of producing a processed food or beverage; a container-packed processed food or beverage; a method for improving a flavor of citrus juice; a method for suppressing a decrease in a terpene; a composition for improving a flavor of citrus juice; and a composition for suppressing a decrease in a terpene. The present invention has been completed based on such findings and successfully implemented examples.

Thus, the present invention provides each aspect as follows.
[1] A container-packed composition containing citrus juice and 1 ppb to 2,000 ppb of phenethyl acetate.
[2] The composition according to [1], wherein the composition is a container-packed seasoning composition.
[3] The composition according to any one of [1] to [2], wherein the composition is a composition used to improve a flavor of the citrus juice.
[4] The composition according to any one of [1] to [2], wherein the composition is a composition used to suppress a decrease in a terpene.
[5] The composition according to any one of [1] to [4], wherein the citrus is an aromatic citrus fruit containing at least one terpene.
[6] The composition according to [5], wherein the aromatic citrus fruit is at least one aromatic citrus fruit selected from the group consisting of yuzu, sudachi, kabosu, yuko, lemon, lime, shiikuwasha, daidai, citron, and Buddhas hand citron.
[7] The composition according to any one of []1 to [6], further containing at least one component selected from the group consisting of sugar, water, soy sauce, vinegar, and glutamic acid.
[8] A processed food or beverage containing, as raw materials, the composition according to any one of [1] to [7] and an ingredient.
[9] A method of producing a processed food or beverage, including the step of mixing the composition according to any one of [1] to [7] with an ingredient to obtain the processed food or beverage.
[10] A container-packed processed food or beverage containing citrus juice and 1 ppb to 2,000 ppb of phenethyl acetate.
[11] A method for improving a flavor of citrus juice, including the step of mixing citrus juice or a citrus juice-containing composition with phenethyl acetate such that the phenethyl acetate has a content of from 1 ppb to 2,000 ppb, thereby improving the flavor of citrus juice.
[12] A method for suppressing a decrease in a terpene, including the step of mixing a terpene or a terpene-containing composition with phenethyl acetate such that the phenethyl acetate has a content of from 1 ppb to 2,000 ppb, thereby suppressing the decrease in a terpene.
[13] A composition for improving a flavor of citrus juice or a composition for suppressing a decrease in a terpene, including phenethyl acetate as an active ingredient.
[14] The method according to any one of [11] to [12], wherein the citrus is an aromatic citrus fruit containing at least one terpene.
[15] The method according to [14], wherein the aromatic citrus fruit is at least one aromatic citrus fruit selected from the group consisting of yuzu, sudachi, kabosu, yuko, lemon, lime, shiikuwasha, daidai, citron, and Buddhas hand citron.
[16] The method or composition according to any one of [11] to [15], wherein the composition further includes at least one component selected from the group consisting of sugar, water, soy sauce, vinegar, and glutamic acid.

### Advantageous Effects of Invention

The present invention makes it possible to improve a citrus juice flavor, which deteriorates due to storage and/or heat treatment. The present invention also makes it possible to obtain a seasoning or a food or beverage with maintained or improved desirable flavor of contained citrus juice even after heat sterilization and long-term storage. The present invention further makes it possible to improve the citrus juice flavor regardless of heat treatment. As a result, the present invention should allow for a seasoning or a food or beverage with excellent preservability and flavor retention throughout each stage of, for instance, manufacturing, distribution, display, and storage, independent of influences by external environments such as seasons and storage conditions.

### Brief Description of Drawings

[Figure 1A] Fig. 1A is a graph showing the peak area values of phenethyl acetate in test samples stored at 40°C relative to the peak area values of phenethyl acetate in test samples stored at -20°C, as described in Examples below. The numbers and bars represent mean ± SD.
[Figure 1B] Fig. 1B is a graph showing the relationship between the phenethyl acetate addition concentration and the corresponding phenethyl acetate peak area value, as described in Examples below. The numbers and bars represent mean ± SD.
[Figure 2A] Fig. 2A is graphs each showing the peak area values of each terpene in test samples stored at 40°C relative to the peak area values of each terpene in test samples stored at -20°C at each phenethyl acetate addition concentration, as described in Examples below. The numbers and bars represent mean ± SD.
[Figure 2B] Fig. 2B is graphs each showing the relationship between the phenethyl acetate addition concentration and the corresponding terpene peak area value, as described in Examples below. The numbers and bars represent mean ± SD.

### Description of Embodiments

Hereinafter, each embodiment of the invention will be described in detail. However, the invention is not limited only by matters in this section. The invention can be implemented in various forms as long as the objective of the invention is achieved.

Unless otherwise specified herein, each term herein should have the meaning ordinarily used by those skilled in the art. Thus, the term should not be construed as having an unduly restrictive meaning. In addition, the estimations and theories provided herein are based on the knowledge and experience of the present inventors to date. However, the invention is not necessarily bound only to such estimations and theories.

The term "composition" is not particularly limited to what is normally meant to be used, and includes, for example, a combination of two or more components. The term "raw material" means a material used (added) in the manufacture of, for instance, a composition and can be present in such a composition in a state where the material is maintained or changed qualitatively and/or quantitatively compared to before its use.

The term "food or beverage" means a beverage, a food, or both. The term "processed food or beverage" means a food or beverage obtained by cooking ingredients.

The term "container-packed" means that a container is filled or charged with some material.

The "ppb" is a unit as is usually known. Specifically, 1 ppb is 1/10⁹ and 1 ng/g on a gram basis.

The term "and/or" means any one, or any combination of two or more, or all of the plurality of related items listed.

The term "content" has the same meaning as the concentration and means the proportion of the amount of a component to the total amount of the composition. However, the total content of the components should not exceed 100%.

The wording "to" for indicating a range of values is intended to include values preceding and following the wording; for example, "0% to 100%" means a range from 0% or more and 100% or less. The terms "more than" and "less than" used herein mean the lower and upper limits without including a value following the term, respectively. For example, "more than 1" means a value beyond 1, and "less than 100" means a value below 100.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The term "flavor" means an aroma, a taste, or both.

The term "aroma" means a (orthonasal) fragrance that can be felt only through the nose without going through the mouth. As used herein, the case of simply referring to "fragrance" means an aroma.

The term "taste" means a (retronasal) fragrance going from the oral cavity to the nose when a material is put into the mouth, that is, orally ingested, a taste felt by the tongue when a material is orally ingested, or both.

The wording "improving effect on a flavor of citrus juice" means at least one effect selected from the group consisting of improving a flavor of citrus juice, maintaining a flavor of citrus juice, and suppressing (mitigating, preventing, and stopping) deterioration of a citrus flavor.

The wording "suppressing effect on a decrease in a terpene" means at least one effect selected from the group consisting of maintaining the amount of a terpene and mitigating, preventing, and stopping a decrease in the amount of a terpene.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

A composition according to an embodiment of the invention is a container-packed composition containing citrus juice and phenethyl acetate. A container-packed processed food or beverage according to an embodiment of the invention is a container-packed processed food or beverage containing citrus juice and phenethyl acetate. The composition and the container-packed processed food or beverage according to an embodiment of the invention may be a composition and a processed food or beverage in which the flavor of citrus juice has been improved and/or the decrease in a terpene has been suppressed, by themselves.

The composition according to an embodiment of the invention and the container-packed processed food or beverage according to an embodiment of the invention are compared. The composition according to an embodiment of the invention is used for seasoning or cooking. By contrast, the container-packed processed food or beverage according to an embodiment of the invention, by itself, can be eaten. This point is a difference. The other configurations are shared. Here, the composition according to an embodiment of the invention will be explained as an example. The container-packed processed food or beverage according to an embodiment of the invention can be described by referring to the description about the composition according to an embodiment of the invention.

Usually, when citrus juice-containing seasonings or foods or beverages are stored at room temperature or subjected to heat sterilization, the citrus juice flavor deteriorates. However, those containing phenethyl acetate together with citrus juice suppress deterioration of the citrus juice flavor. Therefore, the composition according to an embodiment of the invention includes citrus juice and phenethyl acetate and can thus be used as a composition for improving the flavor of citrus juice. According to the investigation by the present inventors, phenethyl acetate has a suppressing effect on a decrease in a terpene contained in citrus juice and so on. Here, the composition according to an embodiment of the invention includes citrus juice and phenethyl acetate and can thus be used as a composition for suppressing a decrease in a terpene. Note that as used herein, the "improving effect on a flavor of citrus juice", "suppressing effect on a decrease in a terpene", or both as exerted by the composition according to an embodiment of the invention may be collectively referred to as an "effective action".

The citrus juice is not particularly limited as long as the juice can be obtained from a fruit(s) of plant(s) classified as citrus fruits. Examples of the citrus fruits include aromatic citrus fruits such as yuzu, sudachi, kabosu, yuko, lemon, lime, shiikuwasha, daidai, citron, or Buddhas hand citron; orange fruits such as chinotto, Jaffa orange, Joppa, Navel orange, Valencia orange, Fukuhara orange, blood orange, or bergamot; grapefruits such as orangello or grapefruit; miscellaneous citrus fruits such as cocktail fruit, Citrus Natsudaidai f. kawanonatsudaidai, so-called golden citrus, Citrus jabara, "Shonan Gold", sweetie, Citrus natsudaidai, Citrus hassaku, "Haruka", "Hime Koharu", or Citrus tamurana; tangor fruits such as dekopon, Citrus iyo, "Kiyomi", "Shiranuhi", or Citrus tankan; tangelo fruits such as Ugli fruit, summer fresh, sweet spring, seminole, tangelo, or minneola; pomelo fruits such as "Anseikan", Citrus kawachiensis, Citrus grandis, or pomelo; or mandarin fruits such as Citrus unshiu, "Ohtsu No. 4", calamondin, Citrus reticulata, Citrus kinokuni, "Sakurajimamikan", Citrus tachibana, "Fujinakamikan", ponkan orange, or mandarin orange. From the viewpoint of enriching the flavor of foods or beverages or seasonings, aromatic citrus fruits are preferred. Yuzu, sudachi, kabosu, yuko, lemon, lime, shiikuwasha, daidai, citron, or Buddhas hand citron is more preferred. Yuzu, sudachi, kabosu, yuko or shiikuwasha is still more preferred. One of the above citrus fruits may be used singly or two or more kinds thereof may be used in combination. The method for obtaining citrus juice is not particularly limited. Examples include a method of obtaining fruit juice from a citrus fruit according to any known method such as a method using processing such as pressing or squeezing; or a method using commercially available citrus juice.

Phenethyl acetate is a conventionally known compound with a structure represented by

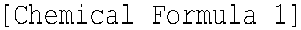

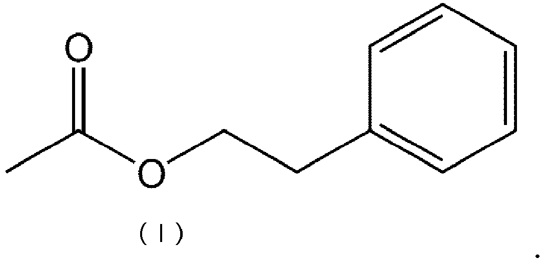

The content of phenethyl acetate is allowed if the amount can be used to exert an effective action. As described in Table 4A in Examples below, the present inventors have conducted research. According to the results, in the case where citrus juice-containing ponzu vinegar was heated and then stored, the flavor of the fruit juice was improved when 1 ppb or more of phenethyl acetate was contained. Thus, the lower limit of the content of phenethyl acetate is 1 ppb based on the total amount of the composition.

Meanwhile, phenethyl acetate, by itself, has a rose aroma, and its aroma threshold is estimated to be about 3,000 ppb. Here, when the content of phenethyl acetate is large, specifically, when more than 3,000 ppb of phenethyl acetate is contained, it is not preferable because the composition is given an undesirable flower-like foreign aroma at the time of eating. Therefore, the upper limit of the content of phenethyl acetate is 2,000 ppb, which is less than 3,000 ppb, based on the total amount of the composition.

As described above, the content of phenethyl acetate may be from 1 ppb to 2,000 ppb, but for eliciting a better effective action, preferably from 10 ppb to 2,000 ppb, and more preferably from 50 ppb to 1,000 ppb. Note that "1 ppb to 2,000 ppb of phenethyl acetate" means, for example, 100 ng to 200,000 ng (= 200 µg) of phenethyl acetate based on 100 ml of the composition. The content of phenethyl acetate may be either the amount contained in the composition or the amount added to the composition.

In the case of ponzu vinegar containing 5 ppb or more of phenethyl acetate based on citrus juice, deterioration of the flavor of the juice is suppressed during storage after heating. Thus, the content of phenethyl acetate based on the citrus juice is preferably from 5 ppb to 10,000 ppb, but for eliciting a better effective action, more preferably from 10 ppb to 10,000 ppb based on the citrus juice, and still more preferably from 10 ppb to 5,000 ppb based on the citrus juice.

The effect of phenethyl acetate on improving a citrus juice flavor can be exerted without being affected by the content of citrus juice. Accordingly, the content of citrus juice is not particularly limited and should be set, as appropriate, according to a desired flavor. For example, if the composition according to an embodiment of the invention is ponzu vinegar, the content of citrus juice is from 1% (w/v) to 50% (w/v) and preferably from 1% (w/v) to 30% (w/v). As another example, if the container-packed processed food or beverage according to an embodiment of the invention is a fruit juice-containing beverage, the content of citrus juice is from 1% (w/v) to 95% (w/v) and preferably from 1% (w/v) to 70% (w/v).

The phenethyl acetate used may be phenethyl acetate itself, or a phenethyl acetate-containing material. When phenethyl acetate itself is used, those commercially available as flavoring agents can be used.

The phenethyl acetate-containing material is not particularly limited as long as phenethyl acetate is contained. Examples include soy sauce produced by the method described in JP 6343710 B. Specifically, the soy sauce is produced by the method including: subjecting unrefined soy sauce, which is obtained after lactic acid fermentation using a regular soy sauce production method, to solid-liquid separation; subjecting a liquid portion to further filtration using various permeation membranes (e.g., a diatomaceous earth-made filter, a UF membrane, an MF membrane) to obtain a unrefined soy sauce liquid; subjecting the unrefined soy source liquid to yeast fermentation using soy sauce yeast. Since such soy sauce contains phenethyl acetate, it is possible to use it as phenethyl acetate-containing soy sauce. In addition, additional specific examples of the phenethyl acetate-containing material include an alcohol beverage such as sake or ginjoshu or a fermented seasoning.

The composition according to an embodiment of the invention may contain, in addition to citrus juice and phenethyl acetate, an additional component(s). Examples of the additional component(s) include, but are not limited to, a component(s) used for foods or beverages or seasonings. Specific examples of the liquid component include water, soy sauce, alcohol, a sweetening component (e.g., mirin, liquid sugar, starch syrup), an acidic component (e.g., vinegar, apple, yuzu, lemon, other aromatic citrus fruits), a fat or oil component (e.g., sesame oil, olive oil, salad oil, soybean oil, Chinese chili oil, butter, beef tallow, lard), an alcoholic liquor component (e.g., wine, sake), or fruit juice (e.g., apple juice). Specific examples of the solid component include salt, a sugar compound (e.g., sugar, glucose, fructose, syrup, isomerized liquid sugar), a grain component (e.g., breadcrumbs, wheat flour, oatmeal), a spice (e.g., ginger, chili, pepper, basil, oregano, a mixed spice), a thickener (e.g., a polysaccharide thickener such as carrageenan, starch, processed starch, gums), a processed meat component (e.g., chicken powder, meat powder, fish powder), a chemical seasoning (e.g., glutamic acid, sodium glutamate, glycine, sodium inosinate, sodium guanylate), a flavor, miso, or curry powder.

The composition according to an embodiment of the invention may contain an extract, soup stock, or an ingredient.

Examples of the extract include: a seafood extract obtained from, for instance, bonito, dried bonito, or scallop; a seaweed extract obtained from, for instance, kelp; a meat extract obtained from chicken, pork, beef or other meats; a vegetable extract obtained from a vegetable such as garlic, ginger, or shiitake mushroom; a yeast extract; or a protein hydrolysate.

Examples of the soup stock include each soup stock obtained, by extraction with a solvent (e.g., hot water, ethanol), from: pulverized and ground dried fish shavings (e.g., dried bonito shavings, dried bullet mackerel shavings, dried blue mackerel shavings, dried tuna shavings, dried sardine shavings); pulverized, boiled and then dried sardine, blue mackerel, horse mackerel, shrimp, or other fish; seaweed such as kelp or wakame seaweed; or mushrooms such as shiitake mushroom.

Examples of the ingredient include: a vegetable (e.g., radish, onion, green onion, carrot, burdock, lotus root, ginger, garlic, cabbage, green bell pepper, tomato, corn, bamboo shoot); a spicy vegetable (e.g., shiso, parsley, celery, leek, Japanese hornwort); a mushroom (e.g., shiitake mushroom, a mushroom, enokitake mushroom, shimeji mushroom); a fruit (e.g., apple, pear, kiwi fruit, pineapple, plum); seeds (e.g., sesame, nuts, chestnuts); meat (e.g., beef, pork, chicken, horse meat, mutton); seafood (e.g., tuna, squid, scallop, crab, salmon); seaweed (e.g., hijiki, kelp, wakame seaweed); or a processed food (e.g., processed eggs, tofu, deep fried tofu, konjac, soy proteins). These ingredients may be grated, made into paste, pulverized, shredded, or cut into shapes such as dice or strips, and then used.

One of the above additional components may be used singly or two or more kinds thereof may be used in combination. The content of the additional component(s) can be set, as appropriate, as long as the problems of the invention can be solved. Specific examples of the additional component(s) include sugar, water, soy sauce, vinegar, and/or glutamic acid when the composition according to an embodiment of the invention is ponzu vinegar. For example, if the container-packed processed food or beverage according to an embodiment of the invention is a fruit juice-containing beverage, sugar and water are relevant.

The form of the composition according to an embodiment of the invention is not particularly limited. For example, the composition according to an embodiment of the invention may be used as a seasoning. In this case, the composition is preferably a liquid composition in a liquid state, a suspension state, or a paste state.

A composition according to an embodiment of the invention is a container-packed composition that is sealed by filling and sealing a container. The container is not particularly limited if the container has a sealable material and shape. Examples include a pouch, a sachet, a bottle, a can, a jar and other packaging containers made of a metal (e.g., aluminum), a plastic (e.g., PET, PTP), a monolayer or multilayer (laminated) film, and glass. Specific examples include: a glass bottle; or a container made of a laminated film obtained by providing an inner side with a heat-sealable resin layer made of olefin-based resin (e.g., polypropylene, polyethylene) and providing an outer side with a layer made of a resin with high gas barrier property (e.g., polyester, polyamide) and/or aluminum foil.

The composition according to an embodiment of the invention has an improving effect on a flavor of citrus juice and a suppressing effect on a decrease in a terpene. The effects can be exerted under any of the same conditions such as conditions in which after the temperature in a hot water bath reaches 80°C, the composition is rapidly cooled on ice and then kept at 5°C, 25°C, or 40°C or conditions immediately after preparation. The effects should be elicited such that one can feel an improvement in the flavor of citrus juice and one can recognize a suppressed decrease in a terpene when compared to a phenethyl acetate-free composition (control) containing the same amount of citrus juice.

The effective action can be checked by the method described in Examples below. For example, the improving effect on the flavor of citrus juice, when the composition according to an embodiment of the invention is ponzu vinegar, is subject to sensory evaluation with respect to evaluation items "fruit juice taste", "fresh citrus aroma", and "miscellaneous taste". The effect is achieved by obtaining at least one evaluation result, preferably two different evaluation results, and more preferably all the three evaluation results selected from the group consisting of feeling a stronger "fruit juice taste", feeling a stronger "fresh citrus aroma", and feeling a weaker "miscellaneous taste" than the control. In addition, as another example, when the container-packed processed food or beverage according to an embodiment of the invention is a fruit juice-containing beverage, the effect is achieved by obtaining at least one evaluation result and preferably all the two evaluation results selected from the group consisting of feeling a stronger "fruit juice taste" and feeling a stronger "sweet citrus aroma" than the control.

The amount of the composition used according to an embodiment of the invention is not particularly limited, and can be set, as appropriate, according to the types of ingredient and food or beverage to be provided with the composition according to an embodiment of the invention. For example, if the composition according to an embodiment of the invention is ponzu vinegar, the amount may be substantially the same as that of ponzu vinegar known so far.

A method of producing a composition according to an embodiment of the invention is not particularly limited. Examples include a method of producing a seasoning, the method including mixing conventionally known components. Specific examples include a method including mixing citrus juice and phenethyl acetate and optionally an additional component(s) by using a mixing means, such as stirring, at room temperature or while heating. The additional component(s) may be subjected to pretreatment such as shredding, pulverization, swelling, and/or heat treatment.

In view of shelf life, it is preferable that the composition according to an embodiment of the invention be subjected to antiseptic treatment such as sterilization. The composition according to an embodiment of the invention is preferably a composition sterilized under the conditions routinely employed during sterilization of seasonings. For example, it is preferable that the composition be heat-sterilized at 100°C or lower for a few seconds to a few minutes. The composition according to an embodiment of the invention may be subjected to retort sterilization. The retort sterilization can be performed at temperatures, pressures, and times that allow for long-term preservation after sterilization. The procedure is not particularly limited, and is performed, for example, at 100°C to 130°C, preferably at about 120°C, under ordinary pressure or pressurized conditions, for 1 min to 30 min and preferably about 10 min. Note that any method can be adopted for sterilization of the composition according to an embodiment of the invention, including: sterilization after mixing of citrus juice, phenethyl acetate, and an additional component(s); mixing citrus juice and an additional component(s), sterilizing them, and then blending the sterilized material with pre-sterilized phenethyl acetate; or mixing individually pre-sterilized citrus juice, phenethyl acetate, and additional component(s).

For example, to obtain a desired processed food or beverage, the composition according to an embodiment of the invention may be mixed with an ingredient(s) (e.g., water, sugars, vegetables, spicy vegetables, mushrooms, fruits, seeds, meat, seafood, seaweed, eggs, processed meat products, processed food or beverages), and used at room temperature or used for cooking with heat. Another embodiment of the invention provides a processed food or beverage including, as raw materials, a composition according to an embodiment of the invention and an ingredient.

The ingredient(s) used with the composition according to an embodiment of the invention may be subject to pretreatment such as cutting into bite-sized pieces, baking, or frying. The composition according to an embodiment of the invention can suppress heat-mediated deterioration of the flavor of citrus juice. Thus, the processed food or beverage according to an embodiment of the invention may be a food product cooked with heat.

The method for cooking with heat while using the composition according to an embodiment of the invention is not particularly limited. The method can be set, as appropriate, according to the type and amount of ingredient used, the type of food product cooked with heat, and others. Examples of the cooking with heat include a usual heat-cooking method such as frying, deep-frying, baking, steaming, heating by using a microwave, heating with hot air, and/or heating in hot water. These heat-cooking methods may be implemented, as appropriate, in combination.

The processed food or beverage according to an embodiment of the invention may be cooked with the composition according to an embodiment of the invention. This makes an excellent flavor of citrus juice. The method of producing a processed food or beverage according to an embodiment of the invention includes the step of mixing the composition according to an embodiment of the invention with an ingredient to obtain a processed food or beverage.

Another embodiment of the invention focuses on the effect of phenethyl acetate on improving the flavor of citrus juice. Provided are a composition for improving a flavor of citrus juice, including phenethyl acetate as an active ingredient; and a method for improving a flavor of citrus juice, including the step of mixing citrus juice or a citrus juice-containing composition with phenethyl acetate such that the phenethyl acetate has a content of from 1 ppb to 2,000 ppb, thereby improving the flavor of citrus juice.

Another embodiment of the invention focuses on the suppressing effect of phenethyl acetate on a decrease in a terpene. Provided are a composition for suppressing a decrease in a terpene, including phenethyl acetate as an active ingredient; and a method for suppressing a decrease in a terpene, including the step of mixing a terpene or a terpene-containing composition with phenethyl acetate such that the phenethyl acetate has a content of from 1 ppb to 2,000 ppb, thereby suppressing the decrease in a terpene.

Specific examples of the container-packed processed food or beverage according to an embodiment of the invention include, but are not limited to, a fruit juice-containing beverage (e.g. juice, cocktail, fruit liquor), in addition to the above-mentioned container-packed food products cooked with heat while using the composition according to an embodiment of the invention.

The invention will be described in more detail with reference to Examples. The invention, however, is not limited to these Examples. Various embodiments of the invention should be allowed as long as the problems of the invention can be solved.

### Examples

### Example 1: Evaluation of Effects on Flavor of Fruit Juice in Ponzu Vinegar (1)

### [1-1. Preparation of Test Ponzu Vinegars]

A phenethyl acetate stock solution was prepared by placing 1 g of 98% pure phenethyl acetate (Sigma-Aldrich) in a 100-ml measuring flask, and filling the flask with 95% ethanol (1 g/100 ml) to the mark. Next, a phenethyl acetate solution to be added to each test ponzu vinegar described below had a fixed amount of 100 µl. Also, the phenethyl acetate stock solution was diluted with water such that the content of phenethyl acetate based on each test ponzu vinegar was a given concentration. In this way, each phenethyl acetate solution was prepared.

Soy sauce, yuzu juice, vinegar, sugar, glutamic acid, water, and each phenethyl acetate solution were mixed in each stainless steel tube with each amount blended shown in Table 1 below. The mixture was stirred, mixed, and dissolved at about 40°C to prepare 100 ml of each test ponzu vinegar. Note that the soy sauce used was ""Kikkoman Tokusen Marudaizu Shoyu"" (Kikkoman Corporation), in which no phenethyl acetate was detected. The yuzu juice used was straight juice and a non-heated, charged product. In addition, in the case of 10 ppb of phenethyl acetate, the concentration of phenethyl acetate means 1,000 ng of phenethyl acetate based on 100 ml of test ponzu vinegar.

The prepared test ponzu vinegar was provided as test ponzu vinegars 1-1 to 8-1 as each test ponzu vinegar before heating. The test ponzu vinegars 1-1 to 8-1 were each placed in a hot water bath. When the temperature reached 80°C, each test ponzu vinegar was rapidly cooled on ice and then kept at about 25°C. They were provided as test ponzu vinegars 1-2 to 8-2 as each test ponzu vinegar after heating.

**[Table 1]**

| (Before heating) (After heating) | Test ponzu vinegar 1-1 Test ponzu vinegar 1-2 | Test ponzu vinegar 2-1 Test ponzu vinegar 2-2 | Test ponzu vinegar 3-1 Test ponzu vinegar 3-2 | Test ponzu vinegar 4-1 Test ponzu vinegar 4-2 | Test ponzu vinegar 5-1 Test ponzu vinegar 5-2 | Test ponzu vinegar 6-1 Test ponzu vinegar 6-2 | Test ponzu vinegar 7-1 Test ponzu vinegar 7-2 | Test ponzu vinegar 8-1 Test ponzu vinegar 8-2 |
|---|---|---|---|---|---|---|---|---|
| Soy sauce | 30.0 ml | 30.0 ml | 30.0 ml | 30.0 ml | 30.0 ml | 30.0 ml | 30.0 ml | 30.0 ml |
| Fruit juice (yuzu) | 20.0 g | 20.0 g | 20.0 g | 20.0 g | 20.0 g | 20.0 g | 20.0 g | 20.0 g |
| Vinegar | 5.0 ml | 5.0 ml | 5.0 ml | 5.0 ml | 5.0 ml | 5.0 ml | 5.0 ml | 5.0 ml |
| Sugar | 10.0 g | 10.0 g | 10.0 g | 10.0 g | 10.0 g | 10.0 g | 10.0 g | 10.0 g |
| Glutamic acid | 1.0 g | 1.0 g | 1.0 g | 1.0 g | 1.0 g | 1.0 g | 1.0 g | 1.0 g |
| Water | Remainder | Remainder | Remainder | Remainder | Remainder | Remainder | Remainder | Remainder |
| Phenethyl acetate solution | 0 µl | 100 µl | 100 µl | 100 µl | 100 µl | 100 µl | 100 µl | 100 µl |
| Total | 100 ml | 100 ml | 100 ml | 100 ml | 100 ml | 100 ml | 100 ml | 100 ml |
| Phenethyl acetate concentration (based on test ponzu vinegar) | 0 ppb | 2 ppb | 5 ppb | 100 ppb | 500 ppb | 1000 ppb | 2000 ppb | 5000 ppb |
| Phenethyl acetate concentration | 0 ppb | 10 ppb | 25 ppb | 500 ppb | 2500 ppb | 5000 ppb | 10000 ppb | 25000 ppb |
| (based on fruit juice) | | | | | | | | |

### [1-2. Sensory Evaluation Method]

Regarding the test ponzu vinegars 1-1 to 8-1 or the test ponzu vinegars 1-2 to 8-2, three panelists (A to C), who were skilled in distinguishing the aroma and taste and aroma of fruit juice, were instructed to use a spoon to take each test ponzu vinegar and smell the aroma of each test ponzu vinegar at room temperature of about 25°C.

The evaluation items included the "fruit juice taste", "acidic taste", and "miscellaneous taste" at the time of eating (ingestion), and the "fresh citrus aroma" at the time of smelling.

The "fruit juice taste" was defined as the taste of fruit juice as felt when each test ponzu vinegar was put (ingested) and retained in the mouth. The "acidic taste" was defined as a sour taste felt by the tongue when each test ponzu vinegar was ingested and retained in the mouth. The "miscellaneous taste" was defined as any of astringency or bitterness (peeling sensation) felt by the tongue when each test ponzu vinegar was ingested and retained in the mouth. The "fresh citrus aroma" was defined as a sour aroma with smelling of grass as generated during squeezing of citrus fruit and felt relatively early by just the nose without taking each test ponzu vinegar into the mouth.

Regarding the sensory evaluation, the phenethyl acetate-free test ponzu vinegar 1-2 after heating served as an evaluation reference ("0"). The sensory evaluation was evaluated with the following nine grades according to how strongly or weakly each test ponzu vinegar was felt with respect to each evaluation item. Note that to conduct a sensory test, each panelist (with a training period: 10 to 20 years) was trained to discuss and evaluate the flavor of fruit juice. Specifically, the flavor characteristics of fruit juice were discussed among the panelists to ensure that each panelist had a common understanding of the flavor characteristics. In order to ensure the validity of the sensory test, each panelist was trained to evaluate several test ponzu vinegars, and the reproducibility of the evaluation by each panelist was then checked. After the checking, each panelist evaluated the fruit juice flavor of each test ponzu vinegar.
-4: Very weak sensation compared to the evaluation reference
-3: Significantly weak sensation compared to the evaluation reference
-2: Weak sensation compared to the evaluation reference
-1: Somewhat weak sensation compared to the evaluation reference
0: Substantially the same sensation as the evaluation reference
1: Somewhat strong sensation compared to the evaluation reference
2: Strong sensation compared to the evaluation reference
3: Significantly strong sensation compared to the evaluation reference
4: Very strong sensation compared to the evaluation reference

### [1-3. Sensory Evaluation Results]

Tables 2A to 2C show the results of the sensory evaluation of the evaluation items "fruit juice taste", "miscellaneous taste", and "fresh citrus aroma" for each test ponzu vinegar. Note that no large difference in the evaluation item "acidic taste" was detected between each test ponzu vinegar.

**[Table 2A]**

| (Before heating) | | Test ponzu vinegar 1-1 | Test ponzu vinegar 2-1 | Test ponzu vinegar 3-1 | Test ponzu vinegar 4-1 | Test ponzu vinegar 5-1 | Test ponzu vinegar 6-1 | Test ponzu vinegar 7-1 | Test ponzu vinegar 8-1 |
|---|---|---|---|---|---|---|---|---|---|
| Phenethyl acetate concentration 0 (based on test ponzu vinegar) | | ppb | 2 ppb | 5 ppb | 100 ppb | 500 ppb | 1000 ppb | 2000 ppb | 5000 ppb |
| Phenethyl acetate concentration (based on fruit juice) | | 0 ppb | 10 ppb | 25 ppb | 500 ppb | 2500 ppb | 5000 ppb | 10000 ppb | 25000 ppb |
| Fruit juice taste | Panelist A | 3 | 3 | 3 | 3 | 3 | 4 | 4 | N.D. |
| | Panelist B | 3 | 3 | 3 | 3 | 3 | 4 | 4 | N.D. |
| | Panelist C | 3 | 3 | 3 | 3 | 3 | 4 | 4 | N.D. |
| | Average | 3.0 | 3.0 | 3.0 | 3.0 | 3.0 | 4.0 | 4.0 | N.D. |

| (After heating) | | Test ponzu vinegar 1-2 | Test ponzu vinegar 2-2 | Test ponzu vinegar 3-2 | Test ponzu vinegar 4-2 | Test ponzu vinegar 5-2 | Test ponzu vinegar 6-2 | Test ponzu vinegar 7-2 | Test ponzu vinegar 8-2 |
|---|---|---|---|---|---|---|---|---|---|
| Phenethyl acetate concentration (based on test ponzu vinegar) | | ppb | 2 ppb | 5 ppb | 100 ppb | 500 ppb | 1000 ppb | 2000 ppb | 5000 ppb |
| Phenethyl acetate concentration (based on fruit juice) | | 0 b | 10 ppb | 25 ppb | 500 ppb | 2500 ppb | 5000 ppb | 10000 ppb | 25000 ppb |
| Fruit juice taste | Panelist A | - | 1 | 2 | 3 | 3 | 3 | 3 | N.D. |
| | Panelist B | - | 1 | 2 | 3 | 3 | 3 | 3 | N.D. |
| | Panelist C | - | 1 | 1 | 3 | 3 | 3 | 3 | N.D. |
| | Average | - | 1.0 | 1.7 | 3.0 | 3.0 | 3.0 | 3.0 | N.D. |

**[Table 2B]**

| (Before heating) | | Test ponzu vinegar 1-1 | Test ponzu vinegar 2-1 | Test ponzu vinegar 3-1 | Test ponzu vinegar 4-1 | Test ponzu vinegar 5-1 | Test ponzu vinegar 6-1 | Test ponzu vinegar 7-1 | Test ponzu vinegar 8-1 |
|---|---|---|---|---|---|---|---|---|---|
| Phenethyl acetate concentration (based on test ponzu vinegar) | | 0 ppb | 2 ppb | 5 ppb | 100 ppb | 500 ppb | 1000 ppb | 2000 ppb | 5000 ppb |
| Phenethyl acetate concentration (based on fruit juice) | | 0 ppb | 10 ppb | 25 ppb | 500 ppb | 2500 ppb | 5000 ppb | 10000 ppb | 25000 ppb |
| Miscellaneous taste | Panelist A | 0 | 0 | 0 | 0 | 0 | 0 | 0 | N.D. |
| | Panelist B | 0 | 0 | 0 | 0 | 0 | 0 | 0 | N.D. |
| | Panelist C | 0 | 0 | 0 | 0 | 0 | 0 | 0 | N.D. |
| | Average | 0.0 | 0.0 | 0.0 | 0.0 | 0.0 | 0.0 | 0.0 | N.D. |

| (After heating) | | Test ponzu vinegar 1-2 | Test ponzu vinegar 2-2 | Test ponzu vinegar 3-2 | Test ponzu vinegar 4-2 | Test ponzu vinegar 5-2 | Test ponzu vinegar 6-2 | Test ponzu vinegar 7-2 | Test ponzu vinegar 8-2 |
|---|---|---|---|---|---|---|---|---|---|
| Phenethyl acetate concentration | | 0 ppb | 2 ppb | 5 ppb | 100 ppb | 500 ppb | 1000 ppb | 2000 ppb | 5000 ppb |
| (based on test ponzu vinegar) Phenethyl acetate concentration (based on fruit juice) | | 0 ppb | 10 ppb | 25 ppb | 500 ppb | 2500 ppb | 5000 ppb | 10000 ppb | 25000 ppb |
| Miscellaneous taste | Panelist A | - | 0 | -1 | -2 | -2 | -2 | -2 | N.D. |
| | Panelist B | - | -1 | -2 | -2 | -2 | -2 | -2 | N.D. |
| | Panelist C | - | 0 | -1 | -2 | -2 | -2 | -2 | N.D. |
| | Average | - | -0.3 | -1.3 | -2.0 | -2.0 | -2.0 | -2.0 | N.D. |

**[Table 2C]**

| (Before heating) | | Test ponzu vinegar 1-1 | Test ponzu vinegar 2-1 | Test ponzu vinegar 3-1 | Test ponzu vinegar 4-1 | Test ponzu vinegar 5-1 | Test ponzu vinegar 6-1 | Test ponzu vinegar 7-1 | Test ponzu vinegar 8-1 |
|---|---|---|---|---|---|---|---|---|---|
| Phenethyl acetate concentration (based on test ponzu vinegar) | | 0 ppb | 2 ppb | 5 ppb | 100 ppb | 500 ppb | 1000 ppb | 2000 ppb | 5000 ppb |
| Phenethyl acetate concentration (based on fruit juice) | | 0 ppb | 10 ppb | 25 ppb | 500 ppb | 2500 ppb | 5000 ppb | 10000 ppb | 25000 ppb |
| Fresh citrus aroma | Panelist A | 2 | 3 | 3 | 3 | 3 | 3 | 4 | N.D. |
| | Panelist B | 2 | 2 | 3 | 3 | 3 | 3 | 4 | N.D. |
| | Panelist C | 3 | 2 | 3 | 3 | 3 | 3 | 4 | N.D. |
| | Average | 2.3 | 2.3 | 3.0 | 3.0 | 3.0 | 3.0 | 4.0 | N.D. |

| (After heating) | | Test ponzu vinegar 1-2 | Test ponzu vinegar 2-2 | Test ponzu vinegar 3-2 | Test ponzu vinegar 4-2 | Test ponzu vinegar 5-2 | Test ponzu vinegar 6-2 | Test ponzu vinegar 7-2 | Test ponzu vinegar 8-2 |
|---|---|---|---|---|---|---|---|---|---|
| Phenethyl acetate concentration (based on test ponzu vinegar) | | 0 ppb | 2 ppb | 5 ppb | 100 ppb | 500 ppb | 1000 ppb | 2000 ppb | 5000 ppb |
| Phenethyl acetate concentration (based on fruit juice) | | 0 ppb | 10 ppb | 25 ppb | 500 ppb | 2500 ppb | 5000 ppb | 10000 ppb | 25000 ppb |
| Fresh citrus aroma | Panelist A | - | 0 | 1 | 3 | 3 | 3 | 3 | N.D. |
| | Panelist B | - | 1 | 2 | 3 | 3 | 3 | 3 | N.D. |
| | Panelist C | - | 0 | 1 | 3 | 3 | 3 | 3 | N.D. |
| | Average | - | 0.3 | 1.3 | 3.0 | 3.0 | 3.0 | 3.0 | N.D. |

As shown in Tables 2A to 2C, the heated test ponzu vinegars 2-2 to 7-2 to which phenethyl acetate was added gave a stronger fruit juice taste, a stronger fresh citrus aroma, and a less miscellaneous taste than the phenethyl acetate-free, heated test ponzu vinegar 1-2, which was the evaluation reference. In addition, the test ponzu vinegar 1-1 and the test ponzu vinegar 1-2 free of phenethyl acetate were compared. Here, the heating was found to result in a loss of preferable flavor. In view of all the results, it has been found that addition of phenethyl acetate to ponzu vinegar makes it possible to suppress flavor deterioration due to the heating of fruit juice.

Further, the test results of the test ponzu vinegars 1-1 to 7-1 before heating have demonstrated that addition of a larger amount of phenethyl acetate makes it possible to give a better flavor than those free of phenethyl acetate. However, the test ponzu vinegars 8-1 and 8-2 with a concentration of added phenethyl acetate of 5,000 ppb had a flower-like overall aroma possible due to the rose aroma of phenethyl acetate. Because of this, the sensory evaluation was not able to be conducted. Note that the test ponzu vinegar 8-2 was poured over boiled tofu, which was then eaten. At that time, the flower-like aroma still stood out and was uncomfortable. This was found to be unsuitable as ponzu vinegar.

The above results have indicated that phenethyl acetate exerts an improving effect on the flavor of fruit juice and a suppressing effect on heat-mediated deterioration of the flavor of fruit juice.

### Example 2: Evaluation of Effects on Flavor of Fruit Juice in Ponzu Vinegar (2)

### [2-1. Preparation of Test Ponzu Vinegars]

The same procedure as in Example 1 was repeated, except that the amount blended was set according to Table 3 below, to prepare test ponzu vinegars 9-1 to 13-1 and 9-2 to 13-2 after heating. Each test ponzu vinegar was filled into a 100-ml transparent bottle and stored under conditions at 5°C for the test ponzu vinegars 9-1 to 13-1 and under conditions at 40°C for the test ponzu vinegars 9-2 to 13-2 for 15 days. Note that the pH of each test ponzu vinegar was measured, and the pH for all the test ponzu vinegars were within the range of 3.87 to 3.90.

**[Table 3]**

| (Stored at 5°C) | Test ponzu vinegar 9-1 | Test ponzu vinegar 10-1 | Test ponzu vinegar 11-1 | Test ponzu vinegar 12-1 | Test ponzu vinegar 13-1 |
|---|---|---|---|---|---|
| (Stored at 40°C) | Test ponzu vinegar 9-2 | Test ponzu vinegar 10-2 | Test ponzu vinegar 11-2 | Test ponzu vinegar 12-2 | Test ponzu vinegar 13-2 |
| Soy sauce | 30.0 ml | 30.0 ml | 30.0 ml | 30.0 ml | 30.0 ml |
| Fruit juice (yuzu) | 20.0 g | 20.0 g | 20.0 g | 20.0 g | 20.0 g |
| Vinegar | 5.0 ml | 5.0 ml | 5.0 ml | 5.0 ml | 5.0 ml |
| Sugar | 10.0 g | 10.0 g | 10.0 g | 10.0 g | 10.0 g |
| Glutamic acid | 1.0 g | 1.0 g | 1.0 g | 1.0 g | 1.0 g |
| Water | Remainder | Remainder | Remainder | Remainder | Remainder |
| Phenethyl acetate solution | 0 µl | 100 µl | 100 µl | 100 µl | 100 µl |
| Total | 100 ml | 100 ml | 100 ml | 100 ml | 100 ml |
| Phenethyl acetate concentration 0 (based on test ponzu vinegar) | ppb | 1 ppb | 10 ppb | 50 ppb | 100 ppb |
| Phenethyl acetate concentration (based on fruit juice) | 0 ppb | 5 ppb | 50 ppb | 250 ppb | 500 ppb |

### [2-2. Sensory Evaluation Method]

As in Example 1, the test ponzu vinegars 9-1 to 13-1 and the test ponzu vinegars 9-2 to 13-2 were tested by sensory evaluation for the "fruit juice taste", "acidic taste", "miscellaneous taste", and "fresh citrus aroma", wherein the phenethyl acetate-free test ponzu vinegar 9-1 stored at 5°C served as the evaluation reference.

### [2-3. Sensory Evaluation Results]

Tables 4A to 4C show the results of the sensory evaluation of the evaluation items "fruit juice taste", "miscellaneous taste", and "fresh citrus aroma" for each test ponzu vinegar. Note that no large difference in the evaluation item "acidic taste" was detected between each test ponzu vinegar.

**[Table 4A]**

| (Stored at 5°C) | Test ponzu vinegar 9-1 | Test ponzu vinegar 10-1 | Test ponzu vinegar 11-1 | Test ponzu vinegar 12-1 | Test ponzu vinegar 13-1 | |
|---|---|---|---|---|---|---|
| Phenethyl acetate concentration | 0 ppb | 1 ppb | 10 ppb | 50 ppb | 100 ppb | |
| (based on test ponzu vinegar) Phenethyl acetate concentration (based on fruit juice) | | 0 ppb | 5 ppb | 50 ppb | 250 ppb | 500 ppb |
| Fruit juice taste | Panelist A | - | 0 | 1 | 2 | 3 |
| | Panelist B | - | 0 | 1 | 2 | 3 |
| | Panelist C | - | 0 | 2 | 3 | 3 |
| | Average | - | 0.0 | 1.3 | 2.3 | 3.0 |

| (Stored at 40°C) | | Test ponzu vinegar 9-2 | Test ponzu vinegar 10-2 | Test ponzu vinegar 11-2 | Test ponzu vinegar 12-2 | Test ponzu vinegar 13-2 |
|---|---|---|---|---|---|---|
| Phenethyl acetate concentration (based on test ponzu vinegar) | 0 | ppb | 1 ppb | 10 ppb | 50 ppb | 100 ppb |
| Phenethyl acetate concentration (based on fruit juice) | | 0 ppb | 5 ppb | 50 ppb | 250 ppb | 500 ppb |
| Fruit juice taste | Panelist A | -4 | -3 | -1 | 0 | 2 |
| | Panelist B | -4 | -3 | -1 | 0 | 2 |
| | Panelist C | -4 | -2 | -1 | 0 | 3 |
| | Average | -4.0 | -2.7 | -1.0 | 0.0 | 2.3 |

**[Table 4B]**

| (Stored at 5°C) | | Test ponzu vinegar 9-1 | Test ponzu vinegar 10-1 | Test ponzu vinegar 11-1 | Test ponzu vinegar 12-1 | Test ponzu vinegar 13-1 |
|---|---|---|---|---|---|---|
| Phenethyl acetate concentration (based on test ponzu vinegar) | | 0 ppb | 1 ppb | 10 ppb | 50 ppb | 100 ppb |
| Phenethyl acetate concentration (based on fruit juice) | | 0 ppb | 5 ppb | 50 ppb | 250 ppb | 500 ppb |
| Miscellaneous taste | Panelist A | - | 0 | -1 | -1 | -2 |
| | Panelist B | - | 0 | -1 | -2 | -2 |
| | Panelist C | - | 0 | -1 | -2 | -3 |
| | Average | - | 0.0 | -1.0 | -1.7 | -2.3 |

| (Stored at 40°C) | | Test ponzu vinegar 9-2 | Test ponzu vinegar 10-2 | Test ponzu vinegar 11-2 | Test ponzu vinegar 12-2 | Test ponzu vinegar 13-2 |
|---|---|---|---|---|---|---|
| Phenethyl acetate concentration (based on test | | 0 ppb | 1 ppb | 10 ppb | 50 ppb | 100 ppb |
| ponzu vinegar) Phenethyl acetate concentration | | 0 ppb | 5 ppb | 50 ppb | 250 ppb | 500 ppb |
| (based on fruit juice) | | | | | | |
| Miscellaneous taste | Panelist A | 3 | 3 | 2 | 1 | 0 |
| | Panelist B | 3 | 3 | 1 | 1 | 0 |
| | Panelist C | 3 | 3 | 1 | 0 | 0 |
| | Average | 3.0 | 3.0 | 1.3 | 0.7 | 0.0 |

**[Table 4C]**

| (Stored at 5°C) | | Test ponzu vinegar 9-1 | Test ponzu vinegar 10-1 | Test ponzu vinegar 11-1 | Test ponzu vinegar 12-1 | Test ponzu vinegar 13-1 |
|---|---|---|---|---|---|---|
| Phenethyl acetate concentration (based on test ponzu vinegar) | | 0 ppb | 1 ppb | 10 ppb | 50 ppb | 100 ppb |
| Phenethyl acetate concentration (based on fruit juice) | | 0 ppb | 5 ppb | 50 ppb | 250 ppb | 500 ppb |
| Fresh citrus aroma | Panelist A | - | 0 | 0 | 1 | 2 |
| | Panelist B | - | 0 | 0 | 1 | 2 |
| | Panelist C | - | 0 | 1 | 1 | 2 |
| | Average | - | 0.0 | 0.3 | 1.0 | 2.0 |

| (Stored at 40°C) | | Test ponzu vinegar 9-2 | Test ponzu vinegar 10-2 | Test ponzu vinegar 11-2 | Test ponzu vinegar 12-2 | Test ponzu vinegar 13-2 |
|---|---|---|---|---|---|---|
| Phenethyl acetate concentration (based on test ponzu vinegar) | | 0 ppb | 1 ppb | 10 ppb | 50 ppb | 100 ppb |
| Phenethyl acetate concentration (based on fruit juice) | | 0 ppb | 5 ppb | 50 ppb | 250 ppb | 500 ppb |
| Fresh citrus aroma | Panelist A | -4 | -4 | -2 | -1 | -1 |
| | Panelist B | -4 | -4 | -2 | -1 | -1 |
| | Panelist C | -4 | -4 | -1 | -1 | -1 |
| | Average | -4.0 | -4.0 | -1.7 | -1.0 | -1.0 |

As shown in Tables 4A to 4C, the phenethyl acetate-free test ponzu vinegar 9-2 stored at 40°C had a weak favorable flavor ("fruit juice taste", "fresh citrus aroma") and gave a strong unfavorable taste ("miscellaneous taste") sensation. By contrast, as demonstrated in the results of the test ponzu vinegars 10-2 to 13-2, a favorable flavor was strongly felt, and an unfavorable taste tended to decrease, depending on the amount of phenethyl acetate added. Substantially the same trend was obtained from the test results obtained by using the test ponzu vinegars stored at 5°C.

The above results have demonstrated that phenethyl acetate-containing ponzu vinegar can be stored while having a favorable fruit juice flavor regardless of temperature conditions.

### Example 3: Evaluation of Effects on Flavor of Fruit Juice in Fruit Juice Beverage (1)

### [3-1. Preparation of Test Beverages]

The same procedure as in Example 1 was repeated, except that the amount blended was set according to Table 5 below, to prepare 100 ml of each of test beverages 1-1 to 7-1 before heating or test beverages 1-2 to 7-2 after heating. Here, in the case of 10 ppb of phenethyl acetate, the concentration of phenethyl acetate also means 1,000 ng of phenethyl acetate based on 100 ml of test beverage.

**[Table 5]**

| (Before heating) | Test beverage 1-1 | Test beverage 2-1 | Test beverage 3-1 | Test beverage 4-1 | Test beverage 5-1 | Test beverage 6-1 | Test beverage 7-1 |
|---|---|---|---|---|---|---|---|
| (After heating) | Test beverage 1-2 | Test beverage 2-2 | Test beverage 3-2 | Test beverage 4-2 | Test beverage 5-2 | Test beverage 6-2 | Test beverage 7-2 |
| Fruit juice (yuzu) | 0.0 g | 1.0 g | 3.0 g | 100 g | 30.0 g | 40.0 g | 70.0 g |
| Sugar | 8.0 g | 8.0 g | 8.0 g | 8.0 g | 8.0 g | 8.0 g | 8.0 g |
| Water | Remainder | Remainder | Remainder | Remainder | Remainder | Remainder | Remainder |
| Phenethyl acetate solution | 100 µl | 100 µl | 100 µl | 100 µl | 100 µl | 100 µl | 100 wl |
| Total | 100 ml | 100 ml | 100 ml | 100 ml | 100 ml | 100 ml | 100 ml |
| Phenethyl acetate concentration (based on test | 10 ppb | 10 ppb | 10 ppb | 10 ppb | 10 ppb | 10 ppb | 10 ppb |
| beverage) Fruit juice concentration | 0% | 1% | 3% | 10% | 30% | 40% | 70% |

### [3-2. Sensory Evaluation Method]

As in Example 1, each test beverage was tested by sensory evaluation for the evaluation items "fruit juice taste", "miscellaneous taste", and "sweet citrus aroma", wherein the test beverages 1-1 to 7-1 before heating served as the evaluation references for the test beverages 1-2 to 7-2 after heating, respectively. Meanwhile, the "sweet citrus aroma" was defined as a citrus-specific sweet aroma felt relatively later by just the nose without taking the test beverage into the mouth.

### [3-3. Sensory Evaluation Results]

Tables 6A and 6B show the results of the sensory evaluation of the evaluation items "fruit juice taste" and "sweet citrus aroma" for the test beverages 1-2 to 7-2. Note that no difference was observed in the evaluation item "miscellaneous taste" between before and after heating at all fruit juice concentrations.

**[Table 6A]**

| (After heating) | | Test beverage 1-2 | Test beverage 2-2 | Test beverage 3-2 | Test beverage 4-2 | Test beverage 5-2 | Test beverage 6-2 | Test beverage 7-2 |
|---|---|---|---|---|---|---|---|---|
| Phenethyl acetate concentration (based on test beverage) | | 10 ppb | 10 ppb | 10 ppb | 10 ppb | 10 ppb | 10 ppb | 10 ppb |
| Fruit juice concentration | | 0% | 1% | 3% | 10% | 30% | 40% | 70% |
| Fruit juice taste | Panelist A | 0 | 1 | 1 | 2 | 0 | 1 | 0 |
| | Panelist B | 0 | 1 | 0 | 1 | 1 | 1 | 1 |
| | Panelist C | 0 | 1 | 1 | 1 | 1 | 1 | 1 |
| | Average | 0.0 | 1.0 | 0.7 | 1.3 | 0.7 | 1.0 | 0.7 |

**[Table 6B]**

| (After heating) | | Test beverage 1-2 | Test beverage 2-2 | Test beverage 3-2 | Test beverage 4-2 | Test beverage 5-2 | Test beverage 6-2 | Test beverage 7-2 |
|---|---|---|---|---|---|---|---|---|
| Phenethyl acetate concentration (based on test beverage) | | 10 ppb | 10 ppb | 10 ppb | 10 ppb | 10 ppb | 10 ppb | 10 ppb |
| Fruit juice concentration | | 0% | 1% | 3% | 10% | 30% | 40% | 70% |
| Sweet citrus aroma | Panelist A | 0 | 0 | 0 | 1 | 2 | 1 | 0 |
| | Panelist B | 0 | 1 | 0 | 1 | 2 | 1 | 1 |
| | Panelist C | 0 | 0 | 0 | 1 | 1 | 1 | 1 |
| | Average | 0.0 | 0.3 | 0.0 | 1.0 | 1.7 | 1.0 | 0.7 |

Tables 6A and 6B have indicated that the addition of phenethyl acetate tended to increase, more than before heating, the fruit juice taste and the sweet citrus aroma regardless of the fruit juice concentration. From these results, it is possible to speculate that in the case where phenethyl acetate coexists, the phenethyl acetate can be decomposed earlier than other flavor components in the fruit juice; and there is a substance(s) contained in the test beverage, such a substance(s) can be decomposed and/or inactivated at the temperature less than 80°C and can decrease and/or mask the flavor component(s), so that the phenethyl acetate can protect the flavor component(s) from the action of such a substance(s).

The above results have demonstrated that a phenethyl acetate-containing, fruit juice-containing beverage can give a favorable fruit juice flavor even after heating regardless of the fruit juice concentration.

### Example 4: Evaluation of Effects on Flavor of Fruit Juice in Fruit Juice Beverage (2)

### [4-1. Preparation of Test Beverages]

The same procedure as in Example 1 was repeated, except that the amount blended was set according to Table 7 below, to prepare test beverages 8-1 to 17-1 before heating or test beverages 8-2 to 17-2 after heating. Like yuzu juice, each fruit juice used was straight juice using each fruit and a non-heated, charged product.

**[Table 7]**

| (Before heating) | Test beverage 8-1 | Test beverage 9-1 | Test beverage 10-1 | Test beverage 11-1 | Test beverage 12-1 | Test beverage 13-1 | Test beverage 14-1 | Test beverage 15-1 | Test beverage 16-1 | Test beverage 17-1 |
|---|---|---|---|---|---|---|---|---|---|---|
| (After heating) | Test beverage 8-2 | Test beverage 9-2 | Test beverage 10-2 | Test beverage 11-2 | Test beverage 12-2 | Test beverage 13-2 | Test beverage 14-2 | Test beverage 15-2 | Test beverage 16-2 | Test beverage 17-2 |
| Fruit juice (yuzu) | 7.0 g | 7.0 g | | | | | | | | |
| Fruit juice (sudachi) | | | 7.0 g | 7.0 g | | | | | | |
| Fruit juice (*kabosu*) | | | | | 7.0 g | 7.0 g | | | | |
| Fruit juice (yuko) | | | | | | | 7.0 g | 7.0 g | | |
| Fruit Juice (shiikuwasha) | | | | | | | | | 7.0 g | 7.0 g |
| Sugar | 8.0 g | 8.0 g | 8.0 g | 8.0 g | 8.0 g | 8.0 g | 8.0 g | 8.0 g | 8.0 g | 8.0 g |
| Water | Remainder | Remainder | Remainder | Remainder | Remainder | Remainder | Remainder | Remainder | Remainder | Remainder |
| Phenethyl acetate solution | 0 µl | 100 µl | 0 µl | 100 µl | 0 µl | 100 µl | 0 µl | 100 µl | 0 µl | 100 µl |
| Total | 100 ml | 100 ml | 100 ml | 100 ml | 100 ml | 100 ml | 100 ml | 100 ml | 100 ml | 100 ml |
| Phenethyl acetate concentration (based on test beverage) | 0 ppb | 10 ppb | 0 ppb | 10 ppb | 0 ppb | 10 ppb | 0 ppb | 10 ppb | 0 ppb | 10 ppb |

### [4-2. Sensory Evaluation Method]

As in Example 3, each test beverage was tested by sensory evaluation for the "fruit juice taste", "miscellaneous taste", and "sweet citrus aroma". Here, the evaluation is each conducted between those having the same kind of fruit juice. Thus, the evaluation reference for the test beverages 8-2 and 9-1 to 9-2 was the test beverage 8-1. Likewise, the evaluation reference for the test beverages 10-2 and 11-1 to 11-2 was the test beverage 10-1; the evaluation reference for the test beverages 12-2 and 13-1 to 13-2 was the test beverage 12-1; the evaluation reference for the test beverages 14-2 and 15-1 to 15-2 was the test beverage 14-1; and the evaluation reference for the test beverages 16-2 and 17-1 to 17-2 was the test beverage 16-1.

### [4-3. Sensory Evaluation Results]

Tables 8A and 8B show the results of the sensory evaluation of the evaluation items "fruit juice taste" and "sweet citrus aroma" for each test beverage. Note that no difference was observed in the evaluation item "miscellaneous taste" between before and after heating at all fruit juice concentrations.

**[Table 8A]**

| (Before heating) | | Test beverage 8-1 | Test beverage 9-1 | Test beverage 10-1 | Test beverage 11-1 | Test beverage 12-1 | Test beverage 13-1 | Test beverage 14-1 | Test beverage 15-1 | Test beverage 16-1 | Test beverage 17-1 |
|---|---|---|---|---|---|---|---|---|---|---|---|
| Kind of fruit juice Phenethyl acetate concentration (based on test beverage) | | Yuzu | | Sudachi | | Kabosu | | Yuko | | Shiikuwasha | |
| | | 0 ppb | 10 ppb | 0 ppb | 10 ppb | 0 ppb | 10 ppb | 0 ppb | 10 ppb | 0 ppb | 10 ppb |
| Fruit juice taste | Panelist A | - | 0 | - | 2 | - | 2 | - | 0 | - | 1 |
| | Panelist B | - | 1 | - | 2 | - | 2 | - | 0 | - | 1 |
| | Panelist C | - | 0 | - | 1 | - | 1 | - | 0 | - | 0 |
| | Average | - | 0.3 | - | 1.7 | - | 1.7 | - | 0.0 | - | 0.7 |

| (After heating) | | Test beverage 8-2 | Test beverage 9-2 | Test beverage 10-2 | Test beverage 11-2 | Test beverage 12-2 | Test beverage 13-2 | Test beverage 14-2 | Test beverage 15-2 | Test beverage 16-2 | Test beverage 17-2 |
|---|---|---|---|---|---|---|---|---|---|---|---|
| Kind of fruit juice Phenethyl acetate concentration (based on test beverage) | | Yuzu | | Sudachi | | kabosu | | Yuko | | Shiikuwasha | |
| | | 0 ppb | 10 ppb | 0 ppb | 10 ppb | 0 ppb | 10 ppb | 0 ppb | 10 ppb | 0 ppb | 10 ppb |
| Fruit juice taste | Panelist A | -2 | 2 | -1 | 1 | 0 | 2 | 0 | 1 | 1 | 1 |
| | Panelist B | -2 | 1 | -1 | 1 | -1 | 3 | 0 | 1 | 0 | 1 |
| | Panelist C | -2 | 1 | -1 | 1 | -1 | 2 | 0 | 1 | 0 | 0 |
| | Average | -2.0 | 1.3 | -1.0 | 1.0 | -0.7 | 2.3 | 0.0 | 1.0 | 0.3 | 0.7 |

**[Table 8B]**

| (Before heating) | | Test beverage 8-1 | Test beverage 9-1 | Test beverage 10-1 | Test beverage 11-1 | Test beverage 12-1 | Test beverage 13-1 | Test beverage 14-1 | Test beverage 15-1 | Test beverage 16-1 | Test beverage 17-1 |
|---|---|---|---|---|---|---|---|---|---|---|---|
| Kind of fruit juice | | Yuzu | | Sudachi | | Kabosu | | Yuko | | Shiikuwasha | |
| Phenethyl acetate concentration (based on test beverage) | | 0 ppb | 10 ppb | 0 ppb | 10 ppb | 0 ppb | 10 ppb | 0 ppb | 10 ppb | 0 ppb | 10 ppb |
| Sweet citrus aroma | Panelist A | - | 0 | - | 1 | - | 0 | - | 0 | - | 0 |
| | Panelist B | - | 1 | - | 1 | - | 1 | - | 0 | - | 0 |
| | Panelist C | - | 0 | - | 0 | - | 0 | - | 0 | - | 0 |
| | Average | - | 0.3 | - | 0.7 | - | 0.3 | - | 0.0 | - | 0.0 |

| (After heating) | | Test beverage 8-2 | Test beverage 9-2 | Test beverage 10-2 | Test beverage 11-2 | Test beverage 12-2 | Test beverage 13-2 | Test beverage 14-2 | Test beverage 15-2 | Test beverage 16-2 | Test beverage 17-2 |
|---|---|---|---|---|---|---|---|---|---|---|---|
| Kind of fruit juice Phenethyl acetate concentration (based on test beverage) | | Yuzu | | Sudachi | | Kabosu | | Yuko | | Shiikuwasha | |
| | | 0 ppb | 10 ppb | 0 ppb | 10 ppb | 0 ppb | 10 ppb | 0 ppb | 10 ppb | 0 ppb | 10 ppb |
| Sweet citrus aroma | Panelist A | 0 | 1 | 0 | 1 | 0 | 0 | 0 | 0 | 0 | 0 |
| | Panelist B | 0 | 1 | 0 | 1 | 0 | 1 | 0 | 1 | 0 | 0 |
| | Panelist C | 0 | 1 | 0 | 1 | 0 | 0 | 0 | 1 | 0 | 0 |
| | Average | 0.0 | 1.0 | 0.0 | 1.0 | 0.0 | 0.3 | 0.0 | 0.7 | 00 | 00 |

Tables 8A and 8B have indicated that the addition of phenethyl acetate tended to increase, more than before heating, the fruit juice taste and the sweet citrus aroma regardless of the nature of fruit juice, or tended to suppress the heat-mediated deterioration. In addition, the addition of phenethyl acetate was found to increase, even without heating, the fruit juice taste and the sweet citrus aroma.

The above results have demonstrated that a phenethyl acetate-containing, fruit juice-containing beverage with/without heating can give a favorable fruit juice flavor regardless of the nature of fruit juice.

### Example 5: Analysis of Phenethyl Acetate in Fruit Juice

### [5-1. Analysis of Aroma Components]

A headspace-solid phase microextraction (HS-SPME) method was used to adsorb components in a gas phase onto fiber. The SPME fiber used was Divinylbenzen/Carboxen/Polydimethylsiloxane (DVB/CAR/PDMS) fiber (75mm, DVB/CAR/PDMS, fused silica, 24 Ga; manufactured by Merck). The conditions were set such that the equilibrium conditions were at 40°C for 5 min and the adsorption conditions were at 40°C for 20 min.

The aroma components collected were injected into and analyzed by GC-MS "GCMS QP-2010 Ultra" (Shimadzu Corporation) with an autosampler "AOC5000" (Shimadzu Corporation). The analysis was conducted with n = 4. The conditions in GC/MS were as follows.
Measurement mode: Scan
Column: DB WAX60 × 0.25mm, i.d. 0.25 µm (Agilent)
Carrier gas: helium
Linear velocity: 40 cm/min
Oven temperature: 40°C (hold 3 min) -> 5°C/min -> 110°C -> 10°C/min -> 240°C (hold 5 min)
Ion source temperature: 240°C
Transfer line temperature: 240°C
Ionization mode: EI
Mass range: 30 m/z to 250 m/z
Measurement time: 24 min to 35 min

### [5-2. Evaluation for Limit of Detection of Phenethyl Acetate]

Yuzu juice, kabosu juice, sudachi juice, yuko juice, and shiikuwasha juice were each centrifuged to remove piles. The same volume of each fruit juice sample liquid obtained was mixed to prepare a fruit juice sample mixture. Next, 100 µL of each phenethyl acetate solution was added to 1.9 mL of the fruit juice sample mixture such that the phenethyl acetate had a concentration of 1 ppb, 0.5 ppb, and 0.1 ppb to prepare a test solution.

The limit of detection was set to the minimum concentration where the S/N ratio at the phenethyl acetate (104 m/z) peak was more than 3.0. The noise was measured between 1 min before and after the peak. The test solution at each phenethyl acetate concentration was measured. As the result, the S/N ratio at the peak where the phenethyl acetate concentration was 0.1 ppb was 2.3, the S/N ratio at the peak where the phenethyl acetate concentration was 0.5 ppb was 5.3, and the S/N ratio at the peak where the phenethyl acetate concentration was 1 ppb was 7.8. In view of these results, the limit of detection was set to 0.5 ppb.

### [5-3. Detection of Phenethyl Acetate in Fruit Juice]

Each fruit juice sample liquid was used to analyze phenethyl acetate. There was no fruit juice sample liquid having a phenethyl acetate peak, the S/N ratio of which was larger than 3.0. This result has demonstrated that the phenethyl acetate concentration in any of the yuzu juice, kabosu juice, sudachi juice, yuko juice, and shiikuwasha juice was less than the limit of detection (0.5 ppb) (i.e., N.D.).

Example 6: To Measure Terpene in Ponzu Vinegar to Which Phenethyl Acetate Was Added

### [6-1. Preparation of Test Samples]

Like Example 2, the test ponzu vinegars 9-1 to 13-1 or the test ponzu vinegars 9-2 to 13-2 prepared after heating were each filled into a 100-ml transparent bottle. The test ponzu vinegars 9-1 to 13-1 were stored under (frozen) conditions at -20°C and the test ponzu vinegars 9-2 to 13-2 were stored under conditions at 40°C for 15 days. Each test ponzu vinegar after storage was diluted 100-fold with water to prepare a test sample.

### [6-2. Measurement Method]

Like Example 5, each test sample was measured by the HS-SPME-GC/MS (measurement time: 2 min to 35 min) for phenethyl acetate (104 m/z), and terpenes such as β-pinene (93 m/z), limonene (121 m/z), sabinene (93 m/z), γ-terpinene (136 m/z), cymene (119 m/z), and linalool (93 m/z). The test ponzu vinegars 9-1 to 13-1, which had been frozen and stored, were thawed in running water on the day of analysis.

### [6-3. Results]

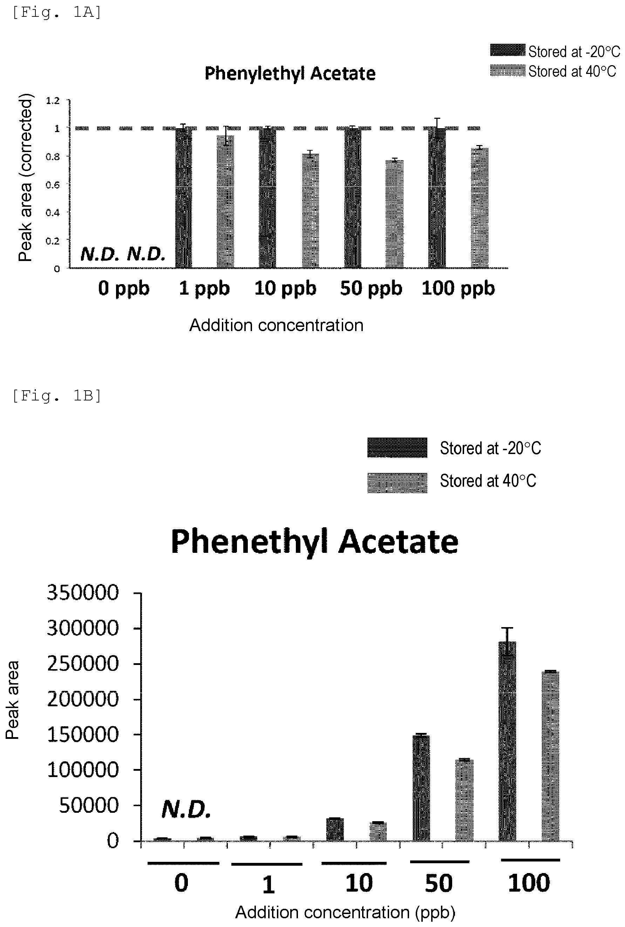

Fig. 1A is a graph and Table 9 is a table showing the measured results of the peak area values of phenethyl acetate in test samples stored at 40°C relative to the peak area values of phenethyl acetate in test samples stored at -20°C, at each phenethyl acetate addition concentration. Fig. 1B is a graph showing the absolute values for the peak area values of phenethyl acetate at each phenethyl acetate addition concentration. The underlined numbers in the table each indicate the numbers with a significant difference relative to those stored at -20°C (t-test, significant level at 0.05)

**[Table 9]**

| Addition concentration | 0 ppb | | 1 ppb | | 10 ppb | | 50 ppb | | 100 ppb | |
|---|---|---|---|---|---|---|---|---|---|---|
| **Storage temperature (°C)** | **-20** | **40** | **-20** | **40** | **-20** | **40** | **-20** | **40** | **-20** | **40** |
| Phenylethyl Acetate | *N.D.* | *N.D.* | 1.00 | 0.94 | 1.00 | 0.82 | 1.00 | 0.77 | 1.00 | 0.86 |

| | | | | | | | | | | |
|---|---|---|---|---|---|---|---|---|---|---|
| *Underlined number: **p < 0.05 t-test vs, -20°C** | | | | | | | | | | |

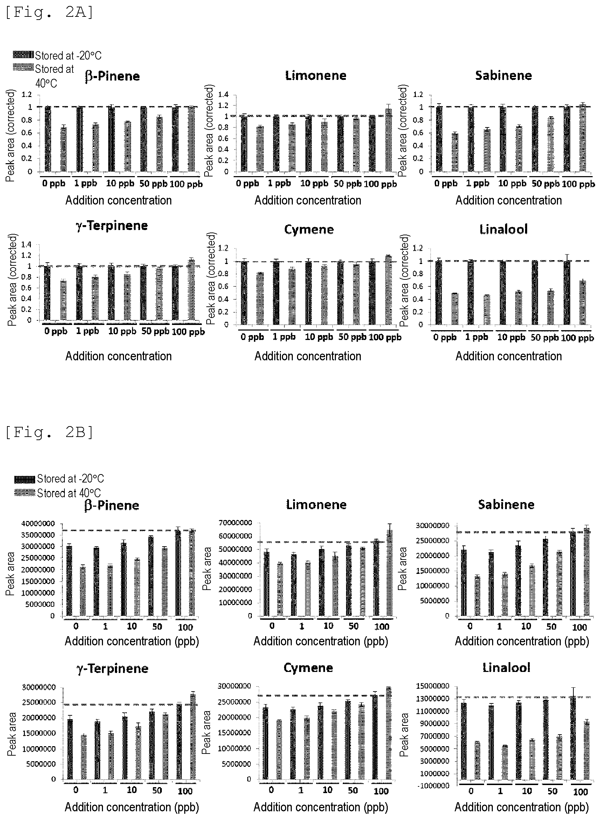

Likewise, Fig. 2A and Table 10 show the peak area values of each terpene in test samples stored at 40°C relative to the peak area values of each terpene in test samples stored at -20°C at each phenethyl acetate addition concentration. In addition, Fig. 2B is graphs each showing the absolute values for the peak area values of each terpene at each phenethyl acetate addition concentration.

**[Table 10]**

| Final addition concentration | 0 ppb | | 1 ppb | | 10 ppb | | 50 ppb | | 100 ppb | |
|---|---|---|---|---|---|---|---|---|---|---|
| **Storage temperature (°C)** | **-20** | **40** | **-20** | **40** | **-20** | **40** | **-20** | **40** | **-20** | **40** |
| β-Pinene | 1.00 | 0.65 | 1.00 | 0.74 | 1.00 | 0.77 | 1.00 | 0.85 | 1.00 | 1.01 |
| D-Limonene | 1.00 | 0.76 | 1.00 | 0.86 | 1.00 | 0.89 | 1.00 | 0.96 | 1.00 | 1.14 |
| Sabinene | 1.00 | 0.55 | 1.00 | 0.66 | 1.00 | 0.71 | 1.00 | 0.83 | 1.00 | 1.08 |
| γ-Terpinene | 1.00 | 0.67 | 1.00 | 0.80 | 1.00 | 0.84 | 1.00 | 0.95 | 1.00 | 1.13 |
| Cymene | 1.00 | 0.77 | 1.00 | 0.88 | 1.00 | 0.92 | 1.00 | 0.95 | 1.00 | 1.08 |
| Linalool | 1.00 | 0.48 | 1.00 | 0.46 | 1.00 | 0.52 | 1.00 | 0.54 | 1.00 | 0.69 |

| | | | | | | | | | | |
|---|---|---|---|---|---|---|---|---|---|---|
| *Underlined number: **p** < **0.05 t-test vs, -20°C** | | | | | | | | | | |

Fig. 1A and Table 9 have indicated that in the case of phenethyl acetate addition concentration of 1 ppb or more, the amount of phenethyl acetate added tended to decrease in those stored at 40°C than in those stored at -20°C.

Fig. 2A and Table 10 have indicated that without addition of phenethyl acetate, each terpene tended to decrease under 40°C storage conditions. By contrast, with addition of phenethyl acetate, a decrease in each terpene has been found to be suppressed under 40°C storage conditions in a phenethyl acetate concentration-dependent manner. Thus, phenethyl acetate has been found to elicit the suppressing effect on a decrease in each terpene and the preserving effect on a flavor.

In addition, Fig. 2B has demonstrated that even under -20°C storage conditions, phenethyl acetate tended to suppress the decrease in each terpene in a concentration-dependent manner. Further, in the case where phenethyl acetate was added at 100 ppb, the amount of each terpene tended to be larger under 40°C storage conditions than under -20°C storage conditions.

The following possibilities can be inferred from the above results, including: a possibility where a terpene can be decomposed at -20°C; a possibility where when a terpene is present together with phenethyl acetate, the phenethyl acetate can be decomposed earlier than the terpene; a possibility of the presence of a substance(s), such as an enzyme, that can decrease a terpene at or near 40°C; and a possibility of the presence of a factor that can chemically or physically decrease a terpene.

### Industrial Applicability

The composition, the processed food or beverage, or the container-packed processed food or beverage according to an embodiment of the invention may be industrially produced such that the flavor of citrus juice contained can be improved and/or the decrease in a terpene can be suppressed. Also, since they can be served in restaurants, they are useful as a seasoning or a food or beverage utilized in various situations. The method, the composition for improving a flavor of citrus juice, or the composition for suppressing decomposition of a terpene according to an embodiment of the invention can be utilized so as to obtain a composition according to an embodiment of the invention and so on.

## Claims

1. A container-packed composition comprising citrus juice and 1 ppb to 2,000 ppb of phenethyl acetate.

2. The composition according to claim 1, wherein the composition is a container-packed seasoning composition.

3. The composition according to any one of claims 1 to 2, wherein the composition is a composition used to improve a flavor of the citrus juice.

4. The composition according to any one of claims 1 to 2, wherein the composition is a composition used to suppress a decrease in a terpene.

5. The composition according to any one of claims 1 to 4, wherein the citrus is an aromatic citrus fruit containing at least one terpene.

6. The composition according to claim 5, wherein the aromatic citrus fruit is at least one aromatic citrus fruit selected from the group consisting of yuzu, sudachi, kabosu, yuko, lemon, lime, shiikuwasha, daidai, citron, and Buddhas hand citron.

7. The composition according to any one of claims 1 to 6, further comprising at least one component selected from the group consisting of sugar, water, soy sauce, vinegar, and glutamic acid.

8. A processed food or beverage comprising, as raw materials, the composition according to any one of claims 1 to 7 and an ingredient.

9. A method of producing a processed food or beverage, comprising the step of mixing the composition according to any one of claims 1 to 7 with an ingredient to obtain a processed food or beverage.

10. A container-packed processed food or beverage comprising citrus juice and 1 ppb to 2,000 ppb of phenethyl acetate.

11. A method for improving a flavor of citrus juice, comprising the step of mixing citrus juice or a citrus juice-containing composition with phenethyl acetate such that the phenethyl acetate has a content of from 1 ppb to 2,000 ppb, thereby improving the flavor of citrus juice.

12. A method for suppressing a decrease in a terpene, comprising the step of mixing a terpene or a terpene-containing composition with phenethyl acetate such that the phenethyl acetate has a content of from 1 ppb to 2,000 ppb, thereby suppressing the decrease in a terpene.

13. A composition for improving a flavor of citrus juice or a composition for suppressing a decrease in a terpene, comprising phenethyl acetate as an active ingredient.

14. The method according to any one of claims 11 to 12, wherein the citrus is an aromatic citrus fruit containing at least one terpene.

15. The method according to claim 14, wherein the aromatic citrus fruit is at least one aromatic citrus fruit selected from the group consisting of yuzu, sudachi, kabosu, yuko, lemon, lime, shiikuwasha, daidai, citron, and Buddhas hand citron.

16. The method or composition according to any one of claims 11 to 15, wherein the composition further comprises at least one component selected from the group consisting of sugar, water, soy sauce, vinegar, and glutamic acid.
